# EUROPÄISCHE PATENTANMELDUNG

(11) **EP 0 994 558 A2**
(43) Veröffentlichungstag der Anmeldung: **19.04.2000**
(21) Anmeldenummer: 99120385.2
(22) Anmeldetag: 13.10.1999
(51) Int. Cl.: H02M 7/155

(54) **Sparschaltung für ein Netzgerät**

(30) Priorität: 14.10.1998 CH 207298
(71) Anmelder: Getatron Elektronik, 8580 Amriswil (CH)
(72) Erfinder: Künzle, Urs, 8580 Amriswil (CH)
(74) Vertreter: EGLI-EUROPEAN PATENT ATTORNEYS

(57) **Zusammenfassung**

Eine Sparschaltung für ein Netzgerät mit einem Transformator (3) hat ein im Primärstromkreis des Transformators (3) angeordnetes Schaltmittel (2) und ein im Sekundärstromkreis des Transformators (3) angeordnetes Mittel (4) zur Detektion eines Sekundärstromes. Ein Pulsgenerator (7) dient zur Erzeugung von Durchschaltpulsen für einen gepulsten Bereitschaftsbetrieb des Transformators (3). Ausserdem ist eine primärseitig vor dem Schaltmittel angeordnete Versorgungsschaltung (6) zur Spannungsversorgung des Pulsgenerators (7) und einer Schaltlogik (8) vorhanden. Die Schaltlogik (8) gibt die Durchschaltpulse bei Abwesenheit eines Sekundärstrom an das Schaltmittel (4) frei. Die Vorteile bestehen darin, dass die Schaltung sowohl für Gleichspannungsnetzgeräte als auch Wechselspannungsnetzgeräte geeignet ist, mit gängigen Halbleiterkomponenten realisierbar ist und keine speziell gewickelten Transformatoren benötigt.

## Beschreibung

Die Erfindung betrifft eine Sparschaltung für ein Netzgerät mit einem Transformator gemäss dem Oberbegriff des Patentanspruchs 1.

Netzgeräte zur Erzeugung einer gerätespezifischen Stromversorgung werden bei einer Vielzahl elektrischer und elektronischer Geräte eingesetzt. Dabei handelt es sich entweder um Netzgeräte zur Bereitstellung einer Wechselspannung, bei denen die Netzspannung auf einen bestimmten Spannungswert heruntertransformiert wird, oder es sind Netzgeräte zur Bereitstellung einer Gleichspannung, bei denen eine Spannungstransformation und eine Gleichrichtung erfolgt. Den meisten Netzgeräten dieser Art ist aber gemeinsam, dass sie (zumeist aus Kostengründen) weder primär- noch sekundärseitig einen Hauptschalter aufweisen. Netzgeräte dieser Art bleiben mehrheitlich auch permanent an einer Netzsteckdose angeschlossen. Wegen des primärseitig fehlenden Hauptschalters bleiben diese Geräte deshalb bei ausgeschaltetem Verbraucher ständig im Leerlaufbetrieb. Sie verbrauchen deshalb eine zwar geringe, im Laufe grösserer Zeiträume aber doch beträchtliche Energiemenge - besonders wenn eine grössere Anzahl derartiger Geräte vorhanden ist. Es sind deshalb bereits Vorrichtungen zur Erzielung einer Energieeinsparung bei ausgeschaltetem Verbraucher bekannt.

Die EP-0 758 153 zeigt eine Schalteinrichtung mit der ein Transformator vom Versorgungsnetz abgetrennt wird wenn sekundärseitig kein Strombedarf besteht. Bei sekundärseitigem Strombedarf erfolgt selbsttätig eine Wiedereinschaltung. Die Detektierung eines sekundärseitigen Strombedarfes erfolgt mit Hilfe einer primärseitigen Zusatzwicklung im Transformator und einer Steuerelektronik. Lediglich prinzipiell erwähnt, nicht aber im Detail ausgeführt, wird auch die Möglichkeit, die Zusatzwicklung auf der Sekundärseite des Transformators anzuordnen. Die Stromversorgung der aktiven Komponenten der Steuerelektronik ist nicht beschrieben. Der Hauptnachteil dieser Lösung besteht darin, dass eine Zusatzwicklung beim Transformator erforderlich ist, was die Herstellungskosten verteuert.

Die EP-0 622 883 (siehe insbesondere Fig. 3) zeigt eine Stromversorgung für ein Kommunikationsgerät, beispielsweise ein Faxgerät, mit einem getakteten Netzteil und einer Schaltung zum reduziertem Stromverbrauch während eines Standby-Betriebszustandes. Die Schaltung hat zwar ein im Primärstromkreis des Transformators angeordnetes elektronisch gesteuertes Schaltelement (FET), allerdings dient dieses nicht zur Schaltung der Netzspannung, sondern in der für getaktete Netzteile üblichen Art zur Schaltung einer aus der Netzspannung erzeugten Gleichspannung. Die Schaltung hat im Sekundärstromkreis des Transformators angeordnete Mittel zur Detektion eines Sekundärstromes. Die Steuerung der Leistungsaufnahme erfolgt durch Pulsbreitenmodulation der Taktfrequenz in Abhängigkeit des detektierten Sekundärstromes. Wegen des angewendeten Funktionsprinzipes wird Energie jedoch nur bei Vorhandensein einer Taktfrequenz auf die Sekundärseite des Transformators übertragen. Die Schaltung zur Erzeugung und Steuerung der Taktfrequenz wird von einer Zusatzwicklung am Transformator gespiesen. Auch bei dieser Lösung besteht der Nachteil darin, dass eine Zusatzwicklung beim Transformator erforderlich ist.

Die Aufgabe der vorliegenden Erfindung besteht darin, eine Sparschaltung für ein Netzgerät mit einem Transformator anzugeben, bei der mit einfachen Mitteln beim Netzgerät während eines Bereitschaftsbetriebes, in dem der vom Netzgerät gespiesene Verbraucher abgeschaltet ist, eine Energieeinsparung möglich ist.

Diese Aufgabe wird durch die im Kennzeichen des Patentanspruchs 1 genannten Merkmale gelöst.

Die Lösung geht davon aus, dass der Transformator eines Netzgerätes im Bereitschaftsbetrieb, also im Betriebsmodus in dem der vom Netzgerät gespiesene Verbraucher abgeschaltet ist und somit kein Sekundärstrom fliesst, nicht ständig eingeschaltet sein muss. In diesem Fall genügt es, wenn der Transformator in einem gepulsten Bereitschaftsbetrieb lediglich während der Dauer der jeweiligen Durchschaltpulse eingeschaltet wird. Mit dem Ein/Aus-Verhältnis der Durchschaltpulse kann auf einfache Weise das Mass der eingesparten Energie bestimmt werden. Während der jeweiligen Einschaltphasen der Durchschaltpulse kann erneut auftretender Energiebedarf (Sekundärstrom) detektiert und das Netzgerät in der Folge für die Dauer des Energiebedarfes permanent eingeschaltet werden.

Die Vorteile der vorliegenden Erfindung bestehen darin, dass sie sowohl für Gleichspannungsnetzgeräte als auch Wechselspannungsnetzgeräte geeignet ist und mit gängigen Mitteln (Halbleiterkomponenten) realisiert werden kann. Es werden keine Transformatoren mit Zusatzwicklungen benötigt. Bei den gängigen Gerätetypen bedeutet dies, dass keine der bereits vorhanden Komponenten ausgetauscht werden müssen und dass lediglich einige weitere (einfache) Komponenten dazutreten.

Von Vorteil ist zudem, dass über das Ein/Aus-Verhältnis der Durchschaltpulse das Ausmass der im Bereitschaftsbetrieb einzusparenden Energie in einem relativ grossen Bereich bedarfsgerecht eingestellt werden.

Ein weiterer Vorteil besteht darin, dass die vorliegende Erfindung keine interne Spannungsquelle in der Form einer Batterie oder eines Akkus braucht, so dass die einwandfreie Funktion selbst nach beliebig langen Abschaltzeiten des jeweiligen Verbrauchers gewährleistet ist.

Letztlich erreicht man mit der vorliegenden Erfindung mit relativ geringem Komponenten- und Schaltungsaufwand eine gute Annäherung an den Idealzustand - nämlich die annähernd vollständige Einsparung der durch den Leerlaufbetrieb des Transformators verbrauchten Energie bei doch jederzeit im Bedarfsfall voll vorhandenen Verfügbarkeit des Verbrauchers beim Einschalten desselben (ohne dass der Verbraucher selbst mit einem Netzgerät ausgerüstet sein muss!).

Zwei Ausführungsbeispiele der Erfindung werden im folgenden anhand von Figuren näher erläutert. So zeigt
- Fig. 1: ein prinzipielles Blockschaltbild der Sparschaltung für ein Netzgerät,
- Fig. 2: ein Schaltbild für eine Sparschaltung für ein Netzgerät mit einem Gleichspannungsausgang, und
- Fig. 3: ein Ausschnitt aus einem Schaltbild für eine Sparschaltung für ein Netzgerät mit einem Wechselspannungsausgang.

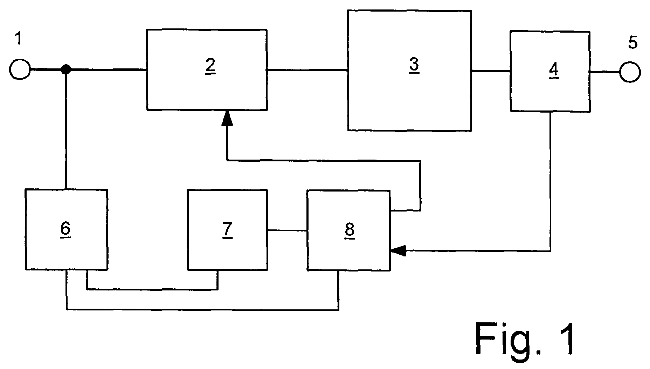

Die Figur 1 zeigt das prinzipielle Blockschaltbild einer erfindungsgemässen Sparschaltung für ein Netzgerät mit einem Transformator.

Ein Netzeingang 1 ist über ein elektronisches Schaltmittel 2 mit einem Transformator 3 verbunden. Der Ausgang des Transformators 3 ist über geeignete Mittel 4 zur Detektion eines sekundärseitigen Stromflusses mit einem Ausgang 5 verbunden. Je nach Bauweise und Verwendung des Netzgerätes kann dem Transformator auch noch eine (hier nicht gezeigte) Gleichrichtungs- und Glättungsstufe nachgeschaltet sein. Der vom Netzgerät gespiesene Verbraucher ist am Ausgang 5 angeschlossen.

Zwischen dem Netzeingang 1 und dem Schaltmittel 2 wird die Netzspannung für eine Versorgungsschaltung 6 abgegriffen, die ihrerseits einem Pulsgenerator 7 und einer Schaltlogik 8 eine Versorgungsspannung zur Verfügung stellt. Das Mittel 4 zur Detektion eines sekundärseitigen Stromflusses liefert ein entsprechendes Steuersignal an die Schaltlogik 8. Die Schaltlogik 8 steuert das Schaltmittel 2.

Prinzipiell funktioniert die Schaltung so, dass bei Abwesenheit eines Sekundärstromes (der Verbraucher ist ausgeschaltet) vom Pulsgenerator 7 erzeugte Durchschaltpulse freigegeben und an das elektronische Schaltmittel 2 weitergeleitet werden. Dadurch wird der Transformator 3, solange er im Leerlauf bzw. Bereitschaftsbetrieb ist, gepulst betrieben, was die resultierende gesamte Einschaltzeit während dieses Betriebszustandes natürlich entsprechend reduziert.

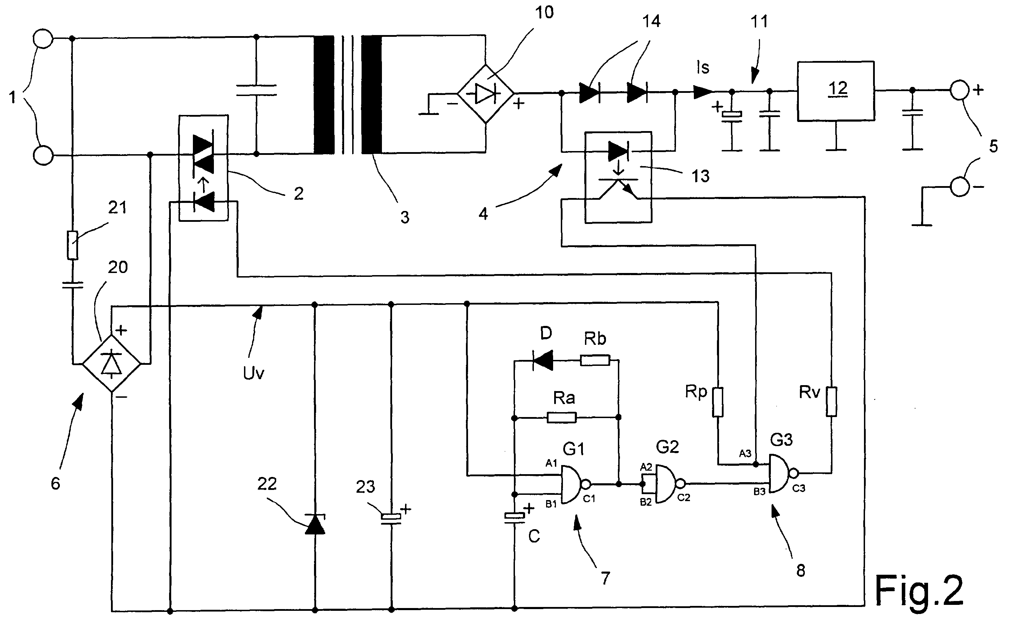

Weitere Einzelheiten zur Funktion können der Detailbeschreibung einer Sparschaltung für ein Netzgerät mit einem Gleichspannungsausgang gemäss Fig. 2 entnommen werden.

Das Netzgerät gemäss Fig. 2 hat einen Gleichrichter 10, eine Glättungsstufe 11 mit Kondensatoren sowie einen Spannungsregler 12 zur Bereitstellung einer geregelten Gleichspannung am Ausgang 5. Als Schaltmittel 2 ist hier ein gängiger, im Nulldurchgang schaltender Opto-Triac eingesetzt. Als Mittel 4 zur Detektion eines sekundärseitigen Stromflusses wird eine Kombination aus einem Optokoppler 13 und zwei parallel zum Steuereingang desselben in Serie geschalteten Dioden 14 eingesetzt. Damit wird erreicht, dass kleine Ströme sicher detektiert werden, bzw. ein Teilstrom immer über die Optokoppler-Diode fliesst. Die Diodenschaltung ist deshalb so gewählt, dass der Spannungsabfall über der Optokoppler-Diode kleiner ist als derjenige über den Dioden 14. Beim Vorhandensein eines sekundärseitigen Stromes Is wird der ausgangsseitige NPN-Transistor des Optokopplers 13 leitend. Durch die Verwendung eines Optokopplers wird auch eine zuverlässige galvanische Entkopplung zwischen dem Sekundärstromkreis und dem Pulsgenerator bzw. der Schaltlogik erreicht.

Die Versorgungsschaltung 6 für den Pulsgenerator 6 und die Schaltlogik 7 besteht aus einem Gleichrichter 20, einem vorgeschalteten Begrenzungswiderstand 21 sowie einer nachgeschalteten Zenerdiode 22 zur Spannungsstabilisierung und einem Glättungskondensator 23. Mit der so bereit gestellten Versorgungsspannung Uv wird eine gängige NAND-Gatter-Schaltung gespiesen, wobei die zur Verfügung stehenden Gatter-Komponenten G1, G2, G3 sowohl zur Realisierung des Pulsgenerators 7 als auch der Schaltlogik 8 eingesetzt werden.

Der Pulsgenerator 7 ist mit der NAND-Gatter-Komponente G1, dem Kondensator C am Sattereingang B1 sowie den Widerständen Ra und Rb und der Diode D im Rückkopplungspfad zwischen dem Gatterausgang C1 und dem Gattereingang B1 realisiert. Der Gattereingang A1 liegt permanent an Uv (log. 1), was bewirkt, dass die Satter-Komponente G1 grundsätzlich gegenüber dem Potential am Sattereingang B1 als Inverter arbeitet. Da der Rückkopplungspfad wegen der Diode D für die beiden Betriebszustände des Inverters unterschiedliche Widerstandswerte aufweist, resultiert eine Oszillatorfunktion mit unterschiedlichem Ein/Aus-Pulsverhältnis. Die Pulslänge (Puls = log.1 = Uv am Satterausgang C1) wird durch die Zeitkonstante der Parallelschaltung der beiden Widerstände Ra und Rb zusammen mit dem Kondensator C bestimmt. Die Pausenlänge (log.0 = 0V am Satterausgang C1) wird durch die Zeitkonstante des Widerstandes Ra zusammen mit dem Kondensator C bestimmt.

Die Schaltlogik 8 besteht aus den Gatter-Komponente G2 und G3, wobei die Gatter-Komponente G2 als Inverter beschaltet ist. Da bei der Gatter-Komponente G3 der Gattereingang A3 über den Widerstand Rp an die Versorgungsspannung Uv (log.1) gelegt ist, funktioniert auch diese Stufe bezüglich des Signales vom Pulsgenerator 7 grundsätzlich lediglich als Inverter. In diesem Betriebsmodus gelangt das Ausgangssignal des Pulsgenerators 7 wegen der zweimaligen Invertierung durch die Gatter-Komponenten G2 und G3 über einen Vorschaltwiderstand Rv unverändert zum Steuereingang des elektronischen Schaltmittels 2 (Opto-Triac). Vom Sattereingang A3 der Gatter-Komponente G3 besteht eine Verbindung zum Optokoppler 13.

Im Normalbetrieb des vorliegenden Netzgerätes (bei eingeschaltetem Verbraucher am Ausgang 5) fliesst ein Sekundärstrom Is. Der Sekundärstrom Is bewirkt, dass der Ausgangstransistor des Optokopplers 13 leitend ist und somit den Gatter-Eingang A3 der Gatter-Komponente G3 über den Widerstand Rp auf 0V (log.0) zieht. Für die Dauer dieses Zustandes wird somit der Gatter-Ausgang C3 der NAND Gatter-Komponente G3 auf dem Potential Uv (log.1) gehalten. Da dieses Signal am Steuereingang des elektronischen Schaltmittels 2 (Opto-Triac) anliegt, ist der Opto-Triac für die Dauer dieses Zustandes ebenfalls permanent eingeschaltet.

Ist der Verbraucher am Ausgang 5 jedoch ausgeschaltet, so fliesst kein Strom Is. Der Ausgangstransistor des Optokopplers 13 ist dann gesperrt und somit liegt der Gatter-Eingang A3 der Satter-Komponente G3 am Potential Uv (log.1). Das Signal vom Pulsgenerator 7 wird weitergeleitet und liegt somit am Steuereingang des Opto-Triacs. Es bewirkt in diesem Betriebszustand somit ein gepulstes Durchschalten des Transformators 3.

Der Betriebszustand in dem kein Sekundärstrom Is fliesst kann auch als Bereitschaftsbetrieb oder Standby-Betrieb bezeichnet werden. Wegen des fehlenden Sekundärstromes Is im Bereitschaftsbetrieb und wegen der bereits früher erwähnten vorzugsweisen Verwendung eines im Nulldurchgang schaltenden Opto-Triacs entstehen keine Probleme beim Schalten der induktiven Last (Transformator 3) und insbesondere auch keine nennenswerten hochfrequenten Störungen. Um sicherzustellen, dass der Opto-Triac einwandfrei arbeitet, muss allerdings die Länge des Einschaltdauer der Durchschaltpulse mindestens eine halbe Periodenlänge der Netzspannungsfrequenz betragen.

Das Ein/Aus-Verhältnis der Durchschaltpulse (Ausgangssignal des Pulsgenerators) ist mit Vorteil zumindest schaltungsintern einstellbar. Damit wird erreicht, dass die Funktionsweise der Sparschaltung an unterschiedliche Bedürfnisse hinsichtlich der Reaktionsgeschwindigkeit der Einschaltung der angeschlossenen Verbraucher angepasst werden kann. Da die freie Wahl der Einschaltdauer der Durchschaltpulse wegen der obenstehend genannten Bedingung eingeschränkt ist, muss zur Veränderung des Ein/Aus-Verhältnisses die Ausschaltdauer der Durchschaltpulse verändert werden. Im gezeigten Beispiel erfolgt dies durch Veränderung des Widerstandes Ra. Da eine Einschaltverzögerung von etwa 1 Sekunde in den meisten Anwendungsfällen noch zumutbar sein dürfte, ergibt sich somit bei einer Einschaltdauer der Durchschaltpulse von 10 ms (dies entspricht einer halbe Periodenlänge bei einer Netzfrequenz von 50 Hz) und einer Ausschaltdauer der Durchschaltpulse von 1 s ein Ein/Aus-Verhältnis der Durchschaltpulse von 1:100. Daraus resultiert auch eine entsprechende Energieeinsparung. Für unbeaufsichtigt bzw. sich automatisch ein- und ausschaltende Geräte kann jedoch ohne weiteres auch eine höhere Ausschaltdauer der Durchschaltpulse gewählt werden, beispielsweise im Bereich von einer Minute, was bereits Ein/Aus-Verhältnisse von bis zu 1:6000 ergibt.

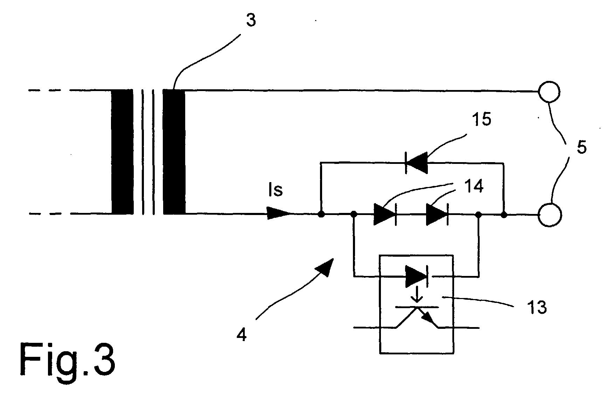

Die Fig. 3 zeigt schliesslich noch einen Ausschnitt aus einem Schaltbild für eine Sparschaltung für ein Netzgerät mit einem Wechselspannungsausgang. Der gezeigte Ausschnitt betrifft im wesentlichen das Mittel 4 zur Detektion eines Sekundärstromes. Die übrigen Bestandteile der Schaltung entsprechen derjenigen gemäss Fig. 2, weshalb bezüglich deren Funktionsweise auf dieselbe verwiesen wird.

Im Sekundärstromkreis des Transformators 3 wird auch hier als Mittel 4 zur Detektion eines sekundärseitigen Stromflusses Is eine Kombination aus einem Optokoppler 13 und zwei parallel zum Steuereingang desselben in Serie geschalteten Dioden 14 eingesetzt. Um den Stromfluss Is in umgekehrter Richtung jedoch nicht zu verhindern, wird antiparallel zu den Dioden 14 noch eine weitere Diode 15 eingesetzt.

Als Schaltmittel 2 kann anstelle eines Opto-Triacs sowohl bei Netzgeräten mit Gleichspannungsausgang als auch bei Netzgeräten mit Wechselspannungsausgang auch eine Thyristorschaltung oder eine Kontaktschaltung verwendet werden.

Als Mittel 4 zur Detektion eines sekundärseitigen Stromflusses können anstelle eines Optokopplers auch andere Komponenten verwendet werden, beispielsweise solche, die eine Aenderung des elektromagnetischen Feldes registrieren.

## Patentansprüche

1. Sparschaltung für ein Netzgerät mit einem Transformator (3), einem im Primärstromkreis des Transformators (3) angeordneten Schaltmittel (2) und einem im Sekundärstromkreis des Transformators (3) angeordneten Mittel (4) zur Detektion eines Sekundärstromes, **dadurch gekennzeichnet, dass** ein Pulsgenerator (7) zur Erzeugung von Durchschaltpulsen für einen gepulsten Bereitschaftsbetrieb des Transformators (3), eine Schaltlogik (8) zur Freigabe der Durchschaltpulse an das Schaltmittel (4) sowie eine primärseitig vor dem Schaltmittel angeordnete Versorgungsschaltung (6) zur Spannungsversorgung des Pulsgenerators (7) und der Schaltlogik (8) vorhanden sind, wobei die Schaltlogik (8) die Durchschaltpulse bei Abwesenheit eines Sekundärstrom an das Schaltmittel (4) freigibt.

2. Sparschaltung nach Patentanspruch 1, **dadurch gekennzeichnet, dass** das Netzgerät zur Abgabe eines Wechselstromes vorgesehen ist und das Mittel (4) zur Detektion eines Sekundärstromes zur Erkennung eines Wechselstromes ausgebildet ist.

3. Sparschaltung nach Patentanspruch 1, **dadurch gekennzeichnet, dass** das Netzgerät zur Abgabe eines Gleichstromes vorgesehen ist, sekundärseitig eine Gleichrichtungsstufe aufweist und das Mittel (4) zur Detektion eines Sekundärstromes zur Erkennung eines Gleichstromes ausgebildet ist.

4. Sparschaltung nach einem der Patentansprüche 1 bis 3, **dadurch gekennzeichnet, dass** das Schaltmittel (2) ein Opto-Triac ist.

5. Sparschaltung nach einem der Patentansprüche 1 bis 3, **dadurch gekennzeichnet, dass** das Mittel (4) zur Detektion eines Sekundärstromes vom Pulsgenerator (7) und der Schaltlogik (8) galvanisch entkoppelt ist.

6. Sparschaltung nach einem der Patentansprüche 1 bis 3, **dadurch gekennzeichnet, dass** das Ein/Aus-Verhältnis der Durchschaltpulse einstellbar ist.

7. Sparschaltung nach einem der Patentansprüche 1 bis 3, **dadurch gekennzeichnet, dass** die Einschaltdauer der Durchschaltpulse mindestens eine halbe Periodenlänge der Netzspannungsfrequenz beträgt.
